# EUROPÄISCHE PATENTSCHRIFT

(11) **EP 0 757 536 B1**
(45) Veröffentlichungstag und Bekanntmachung des Hinweises auf die Patenterteilung: **14.04.1999**
(21) Anmeldenummer: 95908276.9
(22) Anmeldetag: 13.02.1995
(51) Int. Cl.: A47L 9/16

(54) **VORRICHTUNG ZUR TRENNUNG VON FESTEN ODER FLÜSSIGEN PARTIKELN AUS EINEM GASSTROM**
DEVICE FOR SEPARATING SOLID OR LIQUID PARTICLES FROM A STREAM OF GAS
DISPOSITIF POUR LA SEPARATION DE PARTICULES SOLIDES OU LIQUIDES DANS UN COURANT GAZEUX

(30) Priorität: 29.04.1994 DE 4415005
(43) Veröffentlichungstag der Anmeldung: 12.02.1997
(73) Patentinhaber: VORWERK & CO. INTERHOLDING GmbH, 42275 Wuppertal (DE)
(72) Erfinder: THODE, Jürgen, D-42489 Wülfrath (DE)
(74) Vertreter: Müller, Enno, Dipl.-Ing.
(86) Internationale Anmeldenummer: EP9500521
(87) Internationale Veröffentlichungsnummer: WO9529622

(56) Entgegenhaltungen:
- CN-A- 978 485
- DE-A- 2 153 664
- DE-C- 413 923
- NL-A- 7 613 475
- NL-C- 58 963
- US-A- 1 759 947

## Beschreibung

Die Erfindung betrifft eine Vorrichtung, insbesondere einen Staubsauger, gemäß Gattungsbegriff des Anspruchs 1.

Eine derartige Vorrichtung ist aus der DE-A-21 53 664 bekannt. Die Offenlegungsschrift zeigt einen Staubsauger, bei dem die staubbelastete Luft durch ein Saugrohr von einem Geläse angesaugt wird. Dem Gebläse vorgeschaltet ist ein Schaufelrad, auf dessen Achse die Öffnung des Saugrohres gerichtet ist. Stromaufwärts des Schaufelrades befindet sich ein das Saugrohr ungebender Staubsammelbehälter. Über einen schraubebgangförmigen Kanal ist der Staubsammelbehälter mit dem Schaufelrad verbunden.

Eine weitere gattungsgemäße Vorrichtung ist aus der DE-C-413 923 bekannt. Diese Patentschrift zeigt eine Vorrichtung zur Trennung von festen oder flüssigen Partikeln aus einem Gasstrom, mit einem Gebläserad und einem diesem in Strömungsrichtung vorgeschalteten Schaufelrad.

Bei den vorbekannten Lösungen hat sich herausgestellt, daß die Partikeltrennung aus dem Gasstrom nur unvollkommen ist.

Der Erfindung liegt daher die Aufgabe zugrunde, bei einer gattungsgemäßen Vorrichtung die Phasentrennung zu verbessern.

Gelöst wird die Aufgabe durch die im Anspruch 1 angegebene Erfindung.

Die Unteransprüche stellen vorteilhafte Weiterbildungen dar.

Zufolge der erfindungsgemäßen Weiterbildung der bekannten Vorrichtung wird im Mündungsbereich des Saugrohres ein Luftwirbel erzeugt, der die Partikel nach auswärts transportiert. Dort sollen die Partikel von einem im Staubsammelbehälter induzierten Sekundärwirbel weiter in den Staubsammelbehälter transportiert werden. Wesentlich ist dabei, daß die auszusondernden festen oder flüssigen Partikel aus dem Gasstrom heraustransportiert werden. Wegen der in Richtung des Schaufelrades durchgehenden, geradlinigen Öffnung des Staubsammelbehälters werden die durch Auftreffen auf das Schaufelrad beschleunigten Partikeln von dem Sekundärwirbel erfaßt und aus dem Gasstrom heraustransportiert, so daß sich die Partikel im Staubsammelbehälter ablagern können. Um die Entstehung von Sekundärwirbeln zu verstärken, sollte das Verhältnis von Staubbehälterdurchmesser und Schaufelraddurchmesser bevorzugt Werte größer als 2 annehmen.

Die Erfindung sieht vor, daß das Schaufelrad in Stromrichtung dem Gebläserad vorgeordnet ist. Hierdurch findet die Phasentrennung vor dem Gebläserad statt, so daß das Gebläserad nicht von Partikeln beaufschlagt wird. Bei dieser Ausgestaltung erweist es sich als vorteilhaft, wenn der Gasstrom in Achsrichtung durch das Schaufelrad tritt. Die tangential beim Auftreffen auf die Schaufelflächen beschleunigten Partikel bewegen sich dann in einem im wesentlichen stationären Wirbel um die Schaufelradachse herum und gelangen zufolge der Zentrifugalkraft an den Rand einer Schaufelradkammer, von wo aus sie zufolge der Schwerkraft oder des induzierten Sekundärwirbels in den Staubsammelbehälter transportiert werden. Die Schaufelradkammer hat bevorzugt eine trichterförmige Gestalt und läuft in Saugrichtung kegelförmig zu. Das Schaufelrad ist bevorzugt zweiflüglig. Die Schaufeln können gemäß einer bevorzugten Weiterbildung im Bereich der Spitze des kegelförmigen Siebes angeordnet sein, wobei sich der Kegel in Richtung des Gasstromes hin aufweitet. Die Drehzahl soll ab 10.000 Umdrehungen pro Minute betragen. Hierdurch ist ein wirksamer Impulsübertrag auf die Partikel von den Schaufeln oder den Stegen des Siebes gegeben. Eine kompakte Bauform ergibt sich, wenn das Schaufelrad, das Sieb und das Gebläserad materialeinheitlich miteinander verbunden sind. Das kegelförmige Sieb weist Öffnungen auf, die in Umfangsrichtung von Stegen unterbrochen sind. Die Öffnungsweite und die Steghöhe sind hinsichtlich der Drehzahl und der maximalen Gasgeschwindigkeit derart aufeinander abgestimmt, daß die bei sich drehendem Sieb die Öffnungen passierenden Partikel immer vom Steg getroffen werden und somit aus dem Sieb herausgeschleudert werden. Für diesen Mechanismus eignet sich die erfindungsgemäße kegelförmige Siebform besonders gut. Eine andere Weiterbildung der Erfindung sieht vor, daß das Saugrohr im Bereich des Staubsammelbehälters von einem trichterförmigen Schirm umgeben ist. Hierdurch wird die Ausbildung des induzierten Sekundärwirbels im Bereich des Bodens des Staubsammelbehälters minimiert.

Nachfolgend werden anhand beigefügter Zeichnung Ausführungsbeispiele der Erfindung im Detail erläutert. Es zeigen:
- Figur 1: einen erfindungsgemäßen Staubsauger,
- Figur 2: einen Schnitt durch ein erstes Ausführungsbeispiel,
- Figur 3: einen Schnitt durch ein zweites Ausführungsbeispiel,
- Figur 4: ein Siebflügel-Gebläserad gemäß den Ausführungsbeispielen eins, zwei und drei,
- Figur 5: die Draufsicht auf das Schaufelrad eines dritten Ausführungsbeispieles,
- Figur 6: einen Schnitt durch ein Siebflügel-Gebläserad gemäß dem dritten Ausführungsbeispiel entsprechend der Linie VI-VI und
- Figur 7: ein viertes Ausführungsbeispiel der Erfindung.

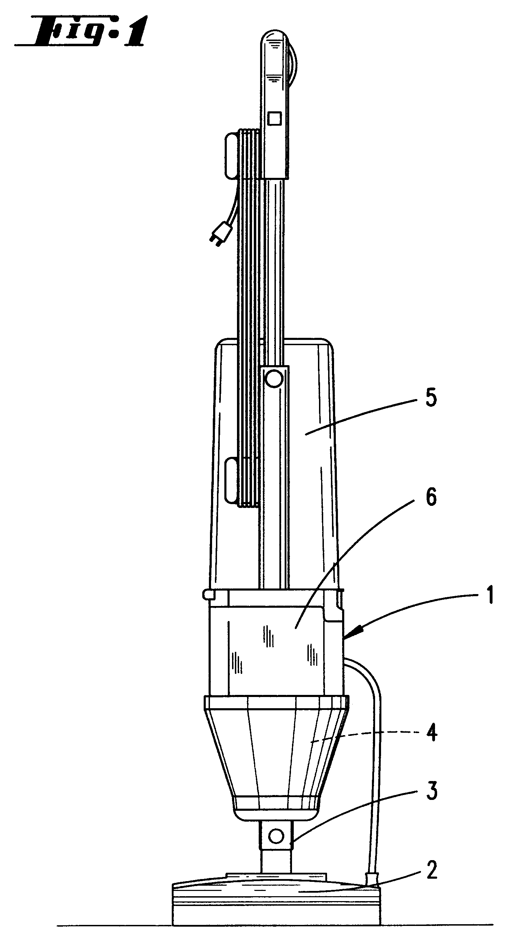

Die erfindungsgemäße Vorrichtung zur Trennung von Phasen, also festen oder flüssigen Partikeln aus einem Gasstrom findet bevorzugt Anwendung in einem Staubsauger, wie hier bspw. in Figur 1 dargestellt ist. Der Staubsauger 1 weist ein Motorgehäuse 6 auf, in welchem ein Elektromotor vorgesehen ist, welcher ein Gebläserad 8 betreibt, mit welchem die Saugluft durch eine Saugdüse 2 und ein sich daran anschließendes Saugrohr 3 gesaugt wird. Ein im Staubsauger 1 vorgesehenes Schaufelrad 9 soll dabei die festen oder flüssigen Partikel aus dem Gasstrom heraus trennen. Die so vorgereinigte Luft wird dann von dem Gebläserad 8 in den nunmehr als Feinfilter 5 wirkenden Staubsack transportiert.

Die Trennung der festen und flüssigen Partikel aus dem Gasstrom erfolgt bevorzugt bei einer Drehzahl von 20.000 bis 35.000 Umdrehungen pro Minute. Durch den Einsatz eines kegelförmigen Siebes 17 kann dabei die Partikelgröße, welche sich im Staubsammelbehälter 4 ablagert, bis zur Größe von 10 µm reduziert werden. Dies hat den Vorteil, daß der Staubsack 5 so gut wie überhaupt nicht mehr geleert werden braucht bzw. in dessen Abmessungen sehr klein ausgebildet werden kann. Überdies kann der für den Staubsack eingesetzte Filterstoff auf die Teilchenfraktion bis zur Größe von 10 µm abgestimmt werden, so daß ein energetisch und kostenmäßig vorteilhaftes Filtersystem verwendet werden kann. Die Vorrichtung eignet sich zur Trennung von festen Partikeln aber auch zum Aufsaugen von Flüssigkeit. Die in dem Gasstrom befindlichen Flüssigkeitströpfchen werden ebenso wie Staubpartikel von dem Schaufelrad tangential beschleunigt und aus dem Luftstrom heraustransportiert.

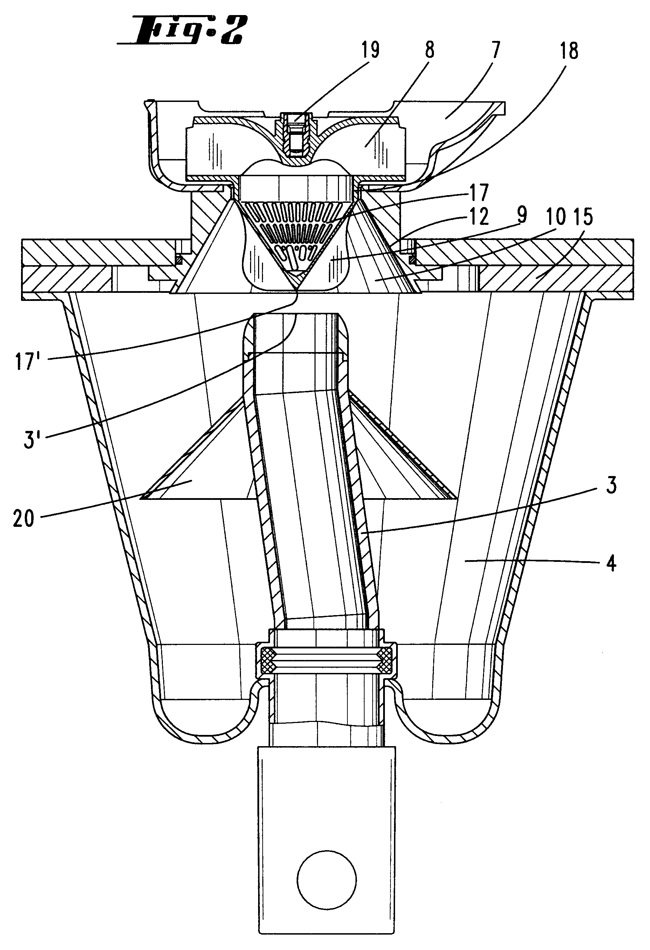

Das in der Figur 2 dargestellte erste Ausführungsbeispiel weist einen Staubsammelbehälter 4 auf, welcher das Saugrohr 3 umgibt. Die Öffnung 3' des Saugrohres 3 ist auf die Achse eines Schaufelrades 9 gerichtet. Das Schaufelrad 9 wird dabei von einem trichterförmigen Mantel 12 umgeben, die Spitze des Trichters weist dabei in Gasstromrichtung.

Der trichterförmige Mantel 12 erstreckt sich etwa über den gesamten Schaufelbereich. Zu seiner durchmessergeringeren Seite weist der Mantel 12 einen kreisförmigen Schlitz auf, welcher in einen Abluftkanal 7 mündet. Der Abluftkanal 7 leitet die Luft am Motor vorbei in den Staubsack 5.

Zufolge der Drehbewegung des Schaufelrades 9 um seine Achse wird die Luft in radialer Richtung beschleunigt. Wegen der ansonsten allseitigen Abgeschlossenheit des Staubsammelbehälters 4 kann die von dem Gebläserad 8 angesaugte Luft lediglich durch die trichteröffnungsseitigen Schlitze in den Abluftkanal 7 entweichen. Um das Schaufelrad 9 bildet sich ein Luftwirbel aus, welcher zufolge der schrägen Wand des Mantels 12 bis in den Bereich des Mantels 11 hineinragt. In diesem Wirbel trennen sich die festen oder flüssigen Partikel in radialer Richtung. Zufolge der geradlinigen Öffnung 10 des Staubsammelbehälters 4 zum Schaufelrad 9 hin wird zumindestens im oberen Bereich des Staubsammelbehälters 4 ein Sekundärwirbel induziert, welcher die Staubpartikel in den Staubsammelbehälter 4 transportiert.

Bei den Ausführungsbeispielen eins bis vier ist das Gebläserad 8 in Stromrichtung dem Schaufelrad 9 nachgeordnet. Das Schaufelrad 9 weist zudem eine derartige Gestalt auf, daß der Iuftstrom die Luftschaufeln im wesentlichen in axialer Richtung passieren kann. Hierzu sind siebförmige Öffnungen 23 vorgesehen, welche einem kegelförmigen Sieb 17 zugeordnet sind. Der Spitzenwinkel des Kegels sollte bevorzugt zwischen 40 und 140° betragen, um eine besonders gute Trennwirkung zu erreichen. Die Kegelspitze 17' des Siebes 17 weist dabei auf die Öffnung 3' des Saugrohres 3. An die Kegelmantelfläche sind zwei gegenüberliegende Schaufeln 24 angeformt, welche das Schaufelrad 9 ausbilden. Auf der Kegelmantelfläche des Siebes 17 sind drei Reihen von Öffnungen 23 vorgesehen, welche jeweils von Stegen 27 getrennt sind. Die Weite der Öffnungen 23 ist abhängig von der radialen Position der jeweiligen Öffnung. Sie hängt auch ab von der wirksamen Höhe des Steges in Gasstromrichtung. Die Bemaßung von Öffnungsweite und Steghöhe ist in Abhängigkeit von der maximalen Luftstromgeschwindigkeit durch die Öffnung und der Drehzahl des Siebes so gewählt, daß die Staubpartikel beim Durchtritt durch die Öffnung vom Steg 27 getroffen werden. Hierdurch ist eine optimale Trennung der Phasen gewährleistet. Sämtliche nicht schon vom Flügel 24 des Schaufelrades 9 getroffenen Partikel werden dann beim Eintritt in das Sieb tangential beschleunigt, so daß sie quer aus dem im wesentlichen in axialer Richtung verlaufenden Saugstrom geschleudert werden und sich dann im Staubsammelbehälter 4 absetzen. Der Radius der Schaufel 24 ist dabei mindestens so groß, bevorzugt geringfügig größer als der Radius der kreisförmigen Öffnung 3' des Saugrohres 3. Ebenso ist der größte Durchmesser des Siebes 17 etwas größer als die Öffnung 3'.

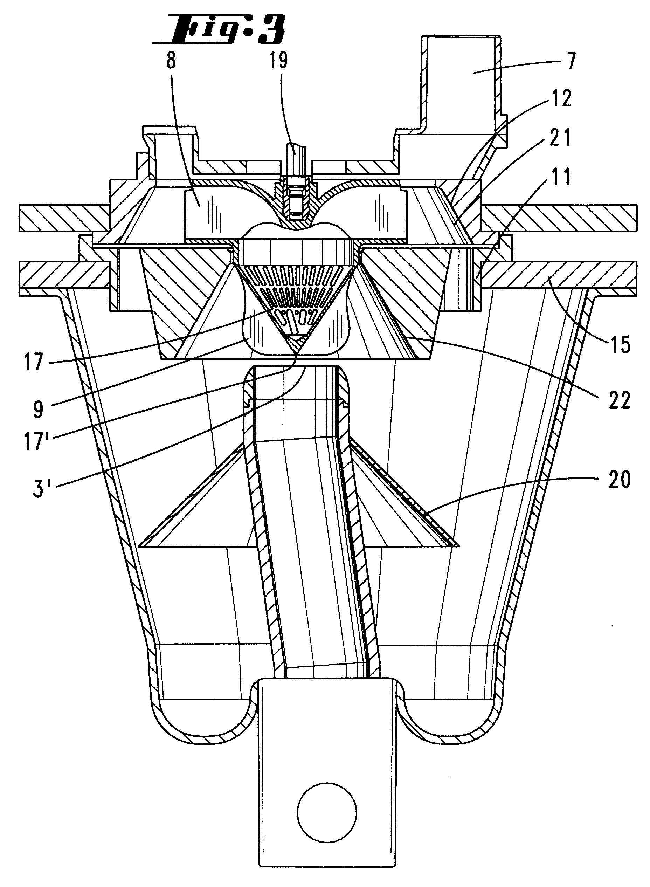

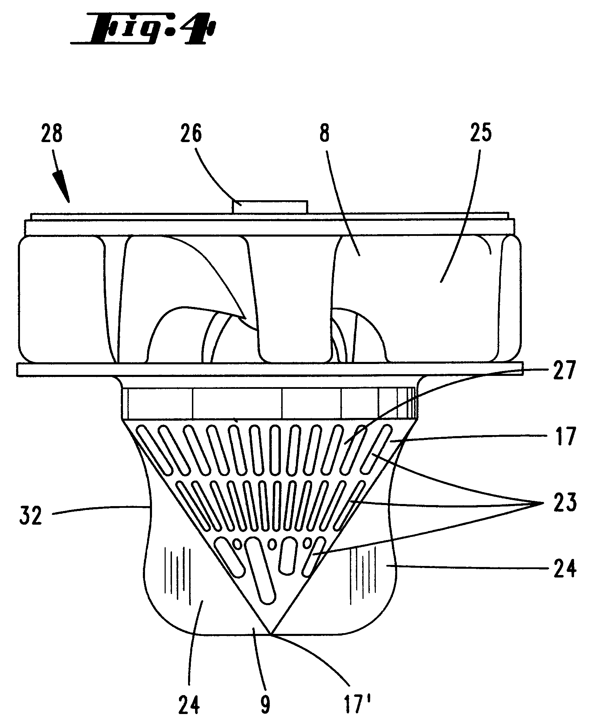

Wie insbesondere der Figur 4 zu entnehmen ist, bildet das Schaufelrad 9 zusammen mit dem Sieb 17 und dem Gebläserad 8 eine Materialeinheit aus, nämlich das Siebflügel-Gebläserad 28. Dieses Siebflügel-Gebläserad 28 weist eine Antriebskopplung 26 für die Welle des Elektromotors auf. Es weist darüber hinaus eine Vielzahl von Gebläseschaufeln 25 auf.

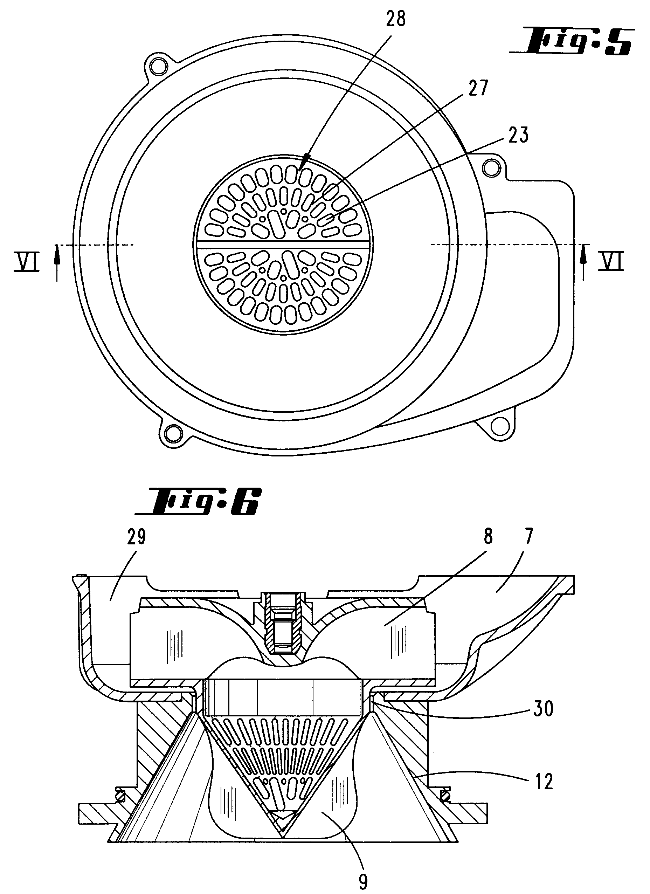

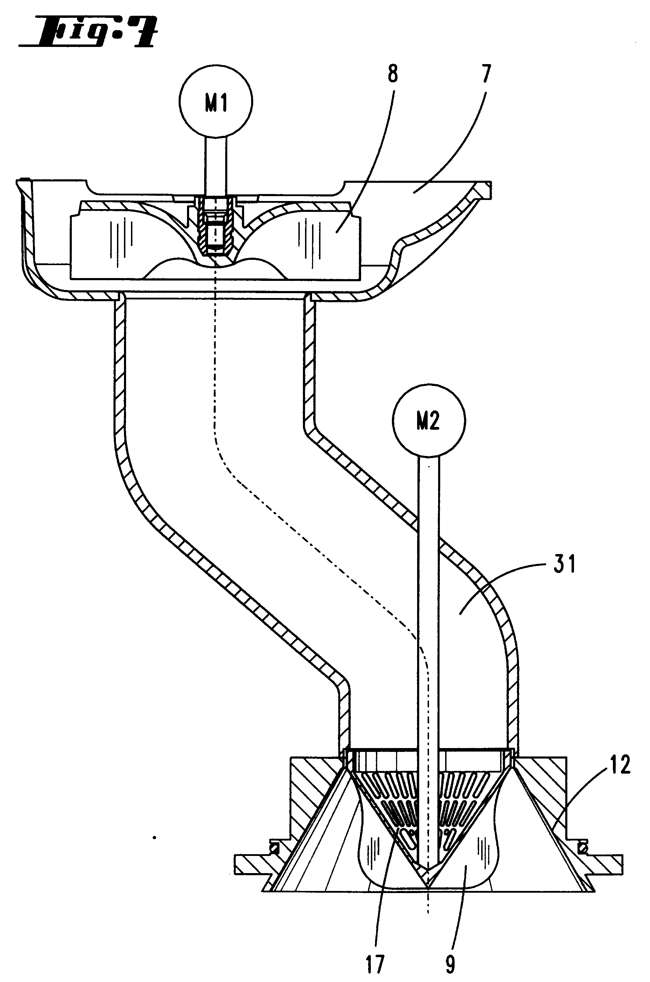

Beim Ausführungsbeispiel gemäß den Figuren 2 bis 7 ist ein zylindrischer Abschnitt 18 im Zwischenbereich des stromabwärts liegenden Gebläserades 8 und des Kegelsiebes 17 des Siebflügel-Gebläserades 28 erkennbar, welcher umfaßt wird von dem durchmessergeringsten Bereich der trichterförmig zulaufenden Staubsammelbehälteröffnung 10. Die Wandung wird vom Mantel 12 ausgebildet. Durch diese Ausgestaltung ist sichergestellt, daß die gesamte Luft durch das Kegelsieb 17 vom Gebläserad 8 gesaugt wird. Dies bedeutet, daß zufolge der in Umfangsrichtung erfolgenden Beaufschlagung der Staubpartikel entweder durch die Stege 27 oder die Schaufeln 24 diese quer aus dem Gesstrom heraus in einen umlaufenden Geswirbel transportiert werden, von wo aus sie in den Staubsammelbehälter 4 fallen.

Beim Ausführungsbeispiel gemäß der Figur 3 ist erkennbar, daß ein kegelstumpfförmiger Mantel 22, welcher das Kegel-Sieb 17 umfängt, durch die Öffnung des Deckels 15 des Staubsammelbehälters 4 bis in den Staubsammelbehälter 4 ragt. Ein zusätzlicher, den Mantel 22 umgebender zylinderförmige Mantel 11 ist über einen Nebenluftkanal 21 mit der Gebläsekammer verbunden, welche eine trichterförmige Wandung 12 aufweist. Zwischen der Öffnungsebene der Öffnung des Mantels 22 und der Saugrohröffnung 3'ist ein geringfügiger Abstand. Die Spitze 17' des Siebes 17 liegt in der Öffnungsebene des Mantels 22. und ist somit um den selben Betrag von der Saugöffnung 3' beabstandet.

Bei dem Siebflügel-Gebläserad 28 (siehe Fig. 4) sind zwei gegenüberliegende Schaufeln 24 vorgesehen, deren Unterkante in die Spitze 17' des Kegelsiebes 17 münden. Die Ecken der Schaufeln 24 sind gerundet und weisen eine bogenförmige Einschnürung 32 auf. Die Flügel 24 gehen in die durchmessergrößte Basis des Siebes fließend über. Die Schaufeln 24 verlaufen demnach im wesentlichen parallel zur Kegelmanteloberfläche des Siebes 17. Hierdurch ist gewährleistet, daß die Öffnungen 23 bzw. die Stege 27 auf der selben Höhe liegen, wie die Schaufeln 24.

Bei den Ausführungsbeispielen gemäß Figur 2 und Figur 3 ist ferner ein trichterförmiger Schirm 20 vorgesehen, welcher das Saugrohr 3 umgibt. Der durchmessergrößte Bereich des Schirmes 20 weist dabei in Richtung des Bodens des Staubsammelbehälters 4.

Bei einem bekannten Staubsauger trifft Luft axial auf ein Zentrifugalrad, durch welches die Luft radial nach außen geführt wird, so daß die größeren Staubpartikel gegen die Innenseite einer das Zentrifugalrad umgebenden Leitfläche geschleudert werden. Danach wird die nur noch mit feinen Staubpartikeln belastete Luft in eine hinter dem Schleuderrad angeordnete, im Durchmesser kleinere, mitrotierende, zylindrische, mit Öffnungen versehene Trommel radial nach innen umgeleitet. Dadurch, daß die Trommel mit einer verhältnismäßig großen Anzahl von Öffnungen versehen ist, die kleine Flügel bilden, können auch die feinen Staubpartikel durch die bessere Übertragung der Rotationsbewegung auf die Luft nach außen gegen die Innenseite einer die zylindrische Trommel umgebende Leitfläche geschleudert werden. Nach Durchströmen der Trommel wird die Luft wieder in axialer Richtung umgelenkt und durch den Motor in die Umgebung ausgeblasen. Staub der in nachgeordnete Filtertüten gelangt kann dabei bei zunehmenden Füllgrad des Filters die Saugleistung der Vorrichtung vermindern.

Um eine Phasentrennung auf kleinstmöglichem Bauraum, mit möglichst kurzem Strömungsweg, möglichst ohne Richtungswechsel der Strömung und mit besserem Strömungswirkungsgrad zu realisieren ist erfindungsgemäß vorgesehen, daß in einem Staubsauger ein Staubsammelbehälter vorgesehen ist, ein Raum für eine Gebläseeinheit 8 und ein Raum für den Luftaustritt 7. Das Saugrohr 3 steht auf der einen Seite mit einer Reinigungsdüse 2 in Verbindung und auf der anderen Seite mit dem Staubsammelbehälter 4. Die schmutzbeladene Luft wird dabei durch das Saugrohr 3 so zugeführt, daß sie zentral auf eine Abscheideeinheit 28 (das Schaufelrad 9), welches in einem Abscheideraum angeordnet ist, trifft. Die Abscheideeinheit 28 besteht aus einem kegelförmigen Hohlkörper, der mit den Öffnungen 23, die in Strömungsrichtung der Luft ausgerichtet sind, versehen ist. Auf dem kegelförmigen Hohlkörper 17 sind eine Anzahl gerader radialer Schaufeln 24 angebracht. Die Abscheideeinheit ist entweder fest auf dem Gebläserad 8, daß durch eine Motorwelle 26 angetrieben wird montiert, oder ist mit dem Gebläserad durch ein weiteres Saugrohr (Fig. 7) 31 verbunden und wird dann durch einen separaten Motor M2 angetrieben. Schmutzpartikel, die durch die Abscheideeinheit 28 abgeschieden werden, werden durch die innere Wandfläche 12 des Abscheideraumes, der mit dem Staubsammelbehälter 4 in Verbindung steht, in dieses umgelenkt. Die so gereinigte Luft strömt dann weiter zum Gebläserad 8, und von da aus in den Luftaustritt 7.

Durch die erfindungsgemäße Anordnung wird erreicht, daß die schmutzbeladene Luft durch das Saugrohr 3 axial auf die Abscheideeinheit 9, 17 trifft, durch die sie dann auch axial austritt, während der grobe Schmutz von den geraden Flügeln 24 und der feine Schmutz von den durch die Öffnungen 23 im kegelförmigen Hohlkörper 17 gebildeten kleinen Flügelrad radial nach außen gegen die Innenseite des Abscheideraumes geschleudert werden. Man erreicht durch diese vielen kleinen Öffnungen 23 eine bessere Übertragung der Rotationsbewegung auf die schmutzbeladene Luft, als mit den geraden Flügeln und kann dadurch auch noch sehr kleine Teile von der Luft abtrennen. Abgeschiedene Schmutzpartikel werden durch die entsprechend gestaltete Innenseite des Abscheideraumes in den Staubsammelbehälter 4 geleitet. Diese vom Schmutz befreite Luft strömt dann weiter axial in die Gebläseeinheit 8. Unter schmutzbeladener Luft kann auch ein Wasserluftgemisch verstanden werden, wobei dann die Wassertröpfchen entsprechend von der Luft getrennt werden.

Bei dem in Figur 7 dargestellten Ausführungsbeispiel ist neben dem Motor M2, welcher die Abscheideeinheit 9, 17 antreibt, ein zusätzlicher Motor M1 dargestellt, welcher das Gebläserad 8 betreibt. Das Gebläserad 8 und die Abscheideeinheit 9, 17 sind durch einen Strömungskanal 31 miteinander verbunden.

## Patentansprüche

1. Vorrichtung zur Trennung von festen oder flüssigen Partikeln aus einem Gasstrom, mit einem Gebläserad (8) und einem Schaufelrad (9), wobei das Schaufelrad (9) dem Gebläserad (8) in Strömungsrichtung vorgeschaltet ist, gekennzeichnet durch ein sich dem Schaufelrad (9) in Strömungsrichtung anschließendes kegelförmiges Sieb (17).

2. Vorrichtung nach Anspruch 1, dadurch gekennzeichnet, daß auf der Kegelmantelfläche des Siebs (17) radial abstehende Schaufeln (24) angeordnet sind, welche das Schaufelrad (9) bilden.

3. Vorrichtung nach einem oder mehreren der vorhergehenden Ansprüche, gekennzeichnet durch ein zweiflügeliges Schaufelrad (9).

4. Vorrichtung nach einem oder mehreren der vorhergehenden Ansprüche, dadurch gekennzeichnet, daß Schaufelrad (9), Sieb (17) und Gebläserad (8) materialeinheitlich miteinander verbunden sind.

5. Vorrichtung nach einem oder mehreren der vorhergehenden Ansprüche, dadurch gekennzeichnet, daß die Öffnungen (23) des Siebes (17) in Umfangsrichtung und die Höhe der die Öffnung unterbrechenden Stege (27) derart aufeinander abgestimmt sind, daß die mit maximaler Sauggeschwindigkeit in die sich drehenden Öffnungen (23) eintretenden Partikel während ihres Weges durch die Öffnung von dem Steg (27) beaufschlagt werden.

6. Vorrichtung nach einem oder mehreren der vorhergehenden Ansprüche, gekennzeichnet durch einen von einem Saugrohr (3) her in den Staubsammelbehälter (4) ragenden, im wesentlichen trichterförmigen Schirm (20).

## Claims

1. Apparatus for separating solid or liquid particles from a stream of gas, having a fan wheel (8) and a blade wheel (9), the blade wheel (9) being located upstream of the fan wheel (8) in the direction of flow, characterised by a conical filter (17) connecting with the blade wheel (9) in the direction of flow.

2. Apparatus according to Claim 1, characterised in that radially outwardly directed blades (24) are provided on the outer conical surface of the filter (17), the blades (24) forming the blade wheel (9).

3. Apparatus according to one or more of the preceding claims, characterised by a two-bladed blade wheel (9).

4. Apparatus according to one or more of the preceding claims, characterised in that the blade wheel (9), filter (17) and fan wheel (8) are connected to one another as a single piece of material.

5. Apparatus according to one or more of the preceding claims, characterised in that the openings (23) of the filter (17) in the circumferential direction and the height of the webs (27) separating the openings are related to one another in such a way that the particles entering into the rotating openings (23) at maximum suction speed are impacted upon by the webs (27) during their path through the openings.

6. Apparatus according to one or more of the preceding claims, characterised by a substantially funnel-shaped shield (20) which projects from a suction tube (3) into the dust-collecting container (4).

## Revendications

1. Dispositif de séparation de particules solides ou liquides à partir d'un flux gazeux, avec une roue de soufflante (8) et une roue à aubes (9), la roue à aubes étant installée en amont de la roue de soufflante (8), dans la direction de l'écoulement, caractérisé par un tamis (17) de forme conique faisant suite à la roue à aubes (9), dis la direction de l'écoulement.

2. Dispositif selon la revendication 1, caractérisé en ce que, sur la surface d'enveloppe conique du tamis (17), sont disposées des aubes (24) faisant saillie radialement et constituant la roue à aubes (9).

3. Dispositif selon l'une ou plusieurs des revendications précédentes, caractérisé par une roue à aubes (9) à deux ailettes.

4. Dispositif selon l'une ou plusieurs des revendications précédentes, caractérisé en ce que la roue à aubes (9), le tamis (17) et la roue de soufflante (8) sont reliés ensemble de façon monobloc par le matériau.

5. Dispositif selon l'une ou plusieurs des revendications précédentes, caractérisé en ce que les ouvertures (23) du tamis (17, dans la direction périphérique, et la hauteur des barrettes (27) interrompant l'ouverture sont déterminées les unes en fonction des autres, de manière que les particules pénétrant avec une vitesse d'aspiration maximale dans les ouvertures (23) en rotation soient sollicitées par la barrette (27) pendant leur cheminement à travers l'ouverture.

6. Dispositif selon l'une ou plusieurs des revendications précédentes, caractérisé par un écran (20) sensiblement en forme d'entonnoir, faisant saillie dans le récipient collecteur de poussières (4) à partir d'un tube d'aspiration (3).
